(19) Europäisches Patentamt

European Patent Office

Office européen des brevets

(11) **EP 1 623 911 A1**

(12) **EUROPEAN PATENT APPLICATION**

(43) Date of publication:
08.02.2006 Bulletin 2006/06

(51) Int Cl.:
*B62D 6/04* (2006.01)   *B62D 6/00* (2006.01)

(21) Application number: 04103741.7

(22) Date of filing: 04.08.2004

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **Ford Global Technologies, LLC, A subsidary of Ford**
**Motor Company**
**Dearborn, MI 48126 (US)**

(72) Inventors:
• **Webers, Klaus**
  **80935, München (DE)**
• **Kees, Markus**
  **41516, Grevenbroich (DE)**

• **Maurice, Jan Pieter**
  **6461 NA, Kerkrade (NL)**
• **Burgio, Gilberto**
  **52080, Aachen (DE)**
• **Anja, Damman**
  **52080, Aachen (DE)**
• **Lakehal-ayat, Mohsen**
  **52072, Aachen (DE)**
• **Gharani, Amir**
  **52074, Aachen (DE)**

(74) Representative: **Drömer, Hans-Carsten et al**
**Ford-Werke Aktiengesellschaft,**
**Patentabteilung NH/DRP,**
**Henry-Ford-Strasse 1**
**50725 Köln (DE)**

(54) **Steering System**

(57)    The Invention relates to a Steering System Control and a Method to determine and compensate disturbances acting on vehicles with the Steering System (1) comprising at least an Electric Power Assisted System (EPAS) (2) containing an Electric Control Unit (ECU) (6). Means for a level control functionality are implemented in the EPAS (2) such that an additional torque is commanded on an Electric Power Assisted System actuator (3).

Fig. 1

**Description**

The invention relates to a Steering System Control and a Method to determine and compensate disturbances acting on vehicles with the steering system comprising at least an Electric Power Assisted System (EPAS) with an Electric Control Unit (ECU).

Electric Power Assisted Steering (EPAS) help the driver in giving the steering system the torque necessary to steer the vehicle. To do this an electrical actuator is placed in the system that delivers a torque as a function of the driver steering effort.

The US 5,528,497 relates to a vehicle steering control system, comprising:

Steering torque input means and powered steering control means for applying a first actuating torque to steerable wheels of a vehicle according to a steering torque applied to said steering torque input means.

The System also comprises means for detecting a lateral dynamic condition of said vehicle; and active reaction generating means for applying a second actuating torque to said steerable wheels so as to control a turning movement of said vehicle according to a signal supplied from said detecting means, said active reaction generating means applying said second actuating torque during all travelling conditions of the vehicle such that an appropriate steering reaction is applied to a steering wheel of the vehicle during said all travelling conditions of the vehicle;

An overall actuating torque applied to said steerable wheels comprises a sum of said first and second actuating torques provided by said powered steering control means and said active reaction generating means.

The vehicle steering control system of US 5,528,497 also discloses, that said second actuating torque provided by said active reaction generating means being reduced as a steering angle of the vehicle increases and that said second actuating torque provided by said active reaction generating means being greater near a neutral point of said steering torque input means than in a larger steering angle range of said steering torque input means.

In the US 5,703,775 is also a vehicle steering control system disclosed, wherein is disclosed, that said second actuating torque being determined according to a deviation of an actual lateral dynamic response of said vehicle from a reference lateral dynamic response that is computed for each given steering input by representing said vehicle with a first-order delay transfer function, whereby an overall actuating torque applied to said steerable wheels comprises a sum of said first and second actuating torques provided by said powered steering control means and said active reaction generating means.

The US 6,112,845 relates to a vehicle steering system, comprising:

a steering shaft having a steering wheel at an end thereof;

a steering device attached to the other end of the steering shaft, and powered by an electric motor;

a manual steering torque sensor for detecting a manual steering torque applied from said steering wheel;

a normal steering assist torque determining unit for determining a normal steering assist torque according to a manual steering torque detected by said manual steering torque sensor;

a vehicle behaviour sensor for detecting a yaw rate and/or a lateral acceleration of the vehicle;

a reactive steering assist torque determining unit for determining a reactive steering assist torque according to a yaw rate and/or a lateral acceleration detected by said vehicle behaviour sensor; and

a control unit for controlling said electric motor according to outputs from said normal steering assist torque determining unit and said reactive steering assist torque determining unit,

wherein said vehicle behaviour sensor further comprises a reverse sensor for detecting a travelling direction of said vehicle, said control unit at least preventing a normal output from said reactive steering assist torque determining unit when the travelling direction detected by said reverse sensor indicates a rearward travel,

wherein the normal output from said reactive steering assist torque determining unit is for a forward travel direction of said vehicle, and

wherein said control unit reverses a sign of the normal output from said reactive steering assist torque determining unit when the travelling direction detected by said reverse sensor indicates a rearward travel.

An electric power steering apparatus for a vehicle for applying an assist force to steering systems so as to increase an operator's induced steering force is disclosed in the US 6,401,019 B2, said apparatus comprising:

a vehicle speed detecting unit for detecting a speed of said vehicle;

a torque detecting unit for detecting steering torque;

a deceleration calculating unit for calculating a deceleration of the vehicle from the vehicle speed detected by said vehicle speed detecting unit;

a first assist force calculating unit for calculating a first assist force from the detection results of said vehicle speed detecting unit and said torque detecting unit;

a second assist force calculating unit for calculating a second assist force in response to the deceleration calculated by said deceleration calculating unit; and

a control unit for applying to said steering system said assist force which is a sum of said first assist force calculated by said first assist force calculating unit and said second assist force calculated by said second assist force calculation unit.

The DE 197 02 313 C1 relates to a device for controlling the steering angle of a motor vehicle, having
a control element actuable by a user,
a vehicle-longitudinal-speed sensor system and
a steering-angle actuator which is coupled to the vehicle-longitudinal-speed sensor system and the control element in such a way that the desired steering-angle value is prescribed as a function of the activation force exerted on the control element and the sensed longitudinal speed of the vehicle, and including
 control-element deflection means which deflect the control element in accordance with the respective actual steering-angle value.

The EP 1 215 103 A2 discloses a control of the dymanic movement of a vehicle arround a defined axis. A regulator determines a correction signal by difference builiding of an adjusting signal with a theoretical adjusting signal, which is computed by the filtering of the detrermined rate or turn and the correction signal is led back to the control transmission line. The determined rate of turn is filtered with the inversion of a desired guidance transmission function. The inverse of a model is implemented in the regulator, which describes a desired dynamic behaviour of the vehicle around the predetermined axis, depending on the setting of the control element, and that this model is dependent on the speed of the vehicle.

The EP 0 927 678 A1 relates to a automatic path correction system subjected to road disturbances or side wind. A Steering rack is free to move laterally along a slider driven by a hydraulic jack. The jack is actuated by an electro-valve to a position such that it's displacement is made equal to a reference value calculated from the vehicle speed, yaw and steering wheel angle.

In the JP 2000335235 relates to a deep side wind direction adjusting mechanism for automobile Resisitor, wherein a deep louver is directed straight forward, whereby an angle made by each of deep fins at both ends and acorresponding shut fin is set at substantially zero, the lower limit value, and the partial ventilitions paths opened fully.

The JP 03-105256 (=DE 39 23 854 A1) discloses an apparatus for measuring effect of side wind in a running vehicle, especially in a car. In the JP 03-105256 paipes are connected to the front shock bamper so that openeings are provided in the front of the car. When a wind comes from the right front and an incident angle is positive, a differenceis positive and, when a wind comes from the left front, the difference is a negative value.

The JP 04-342675 relates to a method for stabilizing vehicle against side wind. Hereby right and left corners of a front end are fitted with a separation acceleration means to accelerate the seperation of an airflow from both sides of the vehicle in the leeward of the corner. In the JP04-342675 yawing moments could be reduced with the acceleration of the airflow seperation, thereby stabilizing the vehicle, and an increase in air resistance could be restrained by limiting the acceleration.

The JP07-129883 relates to a side wind alarm system. A side wind influence degree recognizing means calculates the degree of the influence of the side wind from information from the outside of this vehicle. Contents of a degree of danger are reported by alarm means to the driver.

The EP 0529 244 B1 (=JP 05-196556) discloses a sensor for a vehicle for the purpose of registering the effect of crosswind on the travel behaviour of the vehicle, pressure measuring points, being positioned opposite each other on the sides of the vehicle to measure the air pressure occurring in the region of the car body shell, the pressure measuring points being mounted on the car body shell or designed as drilled holes in the car body shell, and a differential pressure sensor which registers a differential pressure between the two vehicle sides being positioned centrally between the two pressure measuring points and being connected to the two drilled holes via hoses or pipes, which are, as far as possible, of the same length, whereby a signal taken from the differential pressure sensor and representing the differential pressure is converted into a windward force signal resulting from the crosswind via correction factors dependent on the vehicle model and on the position of the pressure holes.

The EP 0 529 258 B1 relates to a method of minimising the effect of side wind on the behaviour of a travelling vehicle which can be steered at will by a driver and has at least two axles, wherein pressure take-off points are disposed opposite one another on the sides of the vehicle for measurement of the air pressure occurring in the region of the outer shell of the vehicle body, and by means of a setting member, which responds to the differential pressure between the pressure take-off points on both sides of the vehicle steering movements are produced on one axle which are directed against the effect of the side wind, whereby means of the setting member an additional steering angle is set on one axle in such a way that the change in the yawing angle of the vehicle caused by the side wind force acting on the vehicle tends towards zero, the said side wind force being defined by the differential pressure determined by measurement.

The EP 0 529 258 B1 also discloses an apparatus for minimising the effect of side wind on the behaviour of travelling vehicle which can be steered at will by a driver and has at least two axles, wherein pressure take-off points are disposed opposite one another on the sides of the vehicle for measurement of the air pressure occurring in the region of the outer shell of the vehicle body, and a setting member which responds to the differential pressure between the pressure take-off points on both sides of the vehicle produces steering movements on one axle which are directed against the effect of the side wind, whereby a control device sets the setting member for the steering angle on the axle in such a way that the change in the yawing angle of the vehicle caused by the side wind force acting on the vehicle tends towards zero, the said side wind force being defined by the differential pressure determined by measurement by means of a differential pressure sensor.

Known mechanical system (rack assist configuration), consist of motor and pinion subsystems, which respectively are responsible for the actuation and for the measurements for the system.

Sensors measure what is necessary to identify the driver's steering torque, the actuator state and the vehicle state. These measurements are processed every time trigger in the Electronic Control Unit (ECU) that calculates the torque the electric motor has to supply.

The most important functionality implemented in commercial EPAS system control units is mainly intended as:

- measuring the current driver torque $(T_d)$;
- compute the desired assist torque as a function of the first

$$T_a = k\, f(T_d) \qquad\qquad (1)$$

where the function $f$ is monotonic increasing and $k$ is a high gain.

Due to the high gain, a big percentage of the steering effort is given by the assist device and a small percentage is given by the driver ( ratio Assist/Driver torque of about 5/1, with peaks of 20/1).

The typical way of working of classical EPAS functions is as follows:

- the driver gives a torque on the steering wheel, the system measures this and supplies an assist torque that helps the driver do what he intended to, with less effort;
- the driver releases the steering wheel, the system measures the drop of driver input torque and interpretes this as his "willing" to have the steering wheel moving towards the on center position. The assist, if necessary, will supply torque that will aid the steering wheel in its on center motion.

The EPAS-System determines the torque (Assist Torque) necessary to assist or help the driver in his driving. This means that EPAS System is considered as a subsystem not directly vehicle oriented. EPAS-System do not include any active functions which are vehicle oriented such as vehicle drift, lateral force compensation and so on.

Therefore it is an object of the invention to provide a vehicle with extended EPAS-System functions enabling the vehicle control with the EPAS actuator.

Inventionally this object is solved by the features of claims 1, 4, 6 and 7.

With the opportunity of commanding an additional torque on the EPAS actuator (on the top of the torque for standard functions implementation) vehicle level control functionality can be implemented into the EPAS-System.

Further the invention provides a determining Unit composed by at least a State Estimator and a Disturbance Compensator implemented in the EPAS-System. The State Estimator is extended to additionally estimate disturbances acting on the plant.

Once the disturbances are known, they can be rejected through the Disturbance Compensator.

In the preferred embodiments of the invention, active function, vehicle oriented (as side wind compensation .....) are included in EPAS packages.

With the invention EPAS system support the driver actively in the control of the vehicle.

For instance EPAS actuator could support the following function:

- if the car is yawing too much, some torque from the EPAS system in the right direction might aid the movement of the vehicle wheels in the opposite direction of the ongoing yaw motion. The car would then be back in track, in a stable motion, without using the brakes,
- if lateral wind force is acting on the vehicle the active function would drive the steering wheel to counteract the vehicle path deviation.

A better understanding of the present invention will be obtained by reading the following detailed description of the invention in conjunction with the accompanying drawings, in which is shown:

Fig.1        a perspective view of a mechanical system,

Fig. 2        a general vehicle control system and the proposed one,

Fig. 3        a vehicle solidal coordinate system,

Fig. 4        a disturbance estimate structure, paticular case,

Fig. 5        a lateral MINAY and PINV compensation bode diagramm, where the parameter d is the wind arm

Fig. 6        a lateral wind ay compensation, nominal simulation,

Fig. 7        a lateral wind ay compensation experiment, corresponding to Fig. 6

Fig. 8        definition of vehicle geometry parameters,

Fig. 9        an EPAS SWC drive, the driver tries to keep the straight path,

Fig. 9a        an EPAS SWC drive the driver doesn't force to keep the path.

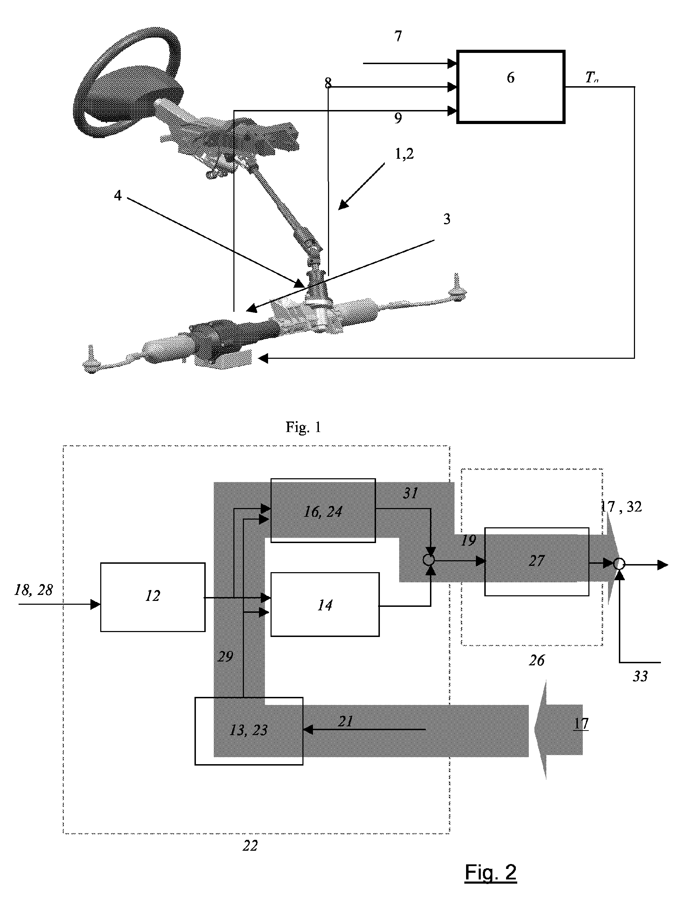

In a preferred embodiment Figure 1 shows a steering device 1 as a mechanical system (rack assist configuration) with an Electric Power Assisted Steering System 2, which is called EPAS-System in the following. The EPAS-System has an electric motor 3 and pinion subsystems 4 which respectively are responsible for the actuation and the measurements for the System. An Electric Control Unit 6 (ECU) preferably containing power electronics is attached to the EPAS-System 2. Environment/vehicle measurements (arrow 7) are put into the control Unit 6 as well as pinion torques ($T_m$) (arrow 8) and other measurements (arrow 9).

The main measurements are in general:

- pinion torque ($T_m$);
- pinion position/velocity;
- electric motor currents;
- vehicle speed;

The electrical part of the EPAS system is composed by:

- sensors;
- one actuator;
- electronic control unit;
- power electronics.

The sensors measure what is necessary to identify the driver's steering torque, the actuator state and the vehicle state. These measurements are processed every time trigger in the control unit 6 that computes the torque the electric motor 3 has to supply in order to obtain:

- acceptable driver's steering effort;
- pleasant steering feel for the driver;
- an accurate steering performance.

The EPAS controller 6 computes the torque *(Assist Torque)* necessary to assist or help the driver in his driving;

this means that controller 6 implements functionalities not directly vehicle oriented. However, with the opportunity to command an additional torque on the EPAS actuator 3 (on top of the torque for standard functions implementation), or with the opportunity to command an additional steering angle on top of the driver's (AFS, SBW steering) vehicle level control functionality can be implemented.

Under this hypothesis, a block diagram (Figure 2) is presented, describing the proposed vehicle control structure 11 then implemented in the ECU 6.

A Vehicle Control System (Figure 2) is generally composed of the following functions:

F1.Reference Generator (RG=12), that indicates the willing or targets to be achieved, defined through the driver' s input;

F2.State Estimator (SE=13), that estimates states of the vehicle that cannot be measured, necessary to close the control feedback;

F3. Feedback Controller (FC=14), takes the references and the states (measured or estimated), and gives a control command that guide the states towards the commands;

F4. Feed Forward Controller (FFC=16), based on the nominal plant model and on the references.

In case that we want to implement Vehicle control in a car equipped with an Electrically Power Assisted Steering (EPAS), if we don't want to completely change the concept and basic strategies of EPAS systems (who's target is basically "assist or help the driver"), we cannot fully implement the feedback structure above described.

The Driver's input, in this case, is the Steering Wheel Position or Torque, which is used by standard EPAS functions to compute the assist torque; we couldn't use it to generate a reference and then to close a feedback control loop depending on vehicle measurements.

We could instead implement the control loop (Arrow 17), if the State Estimator has some additional feature. The reference 18 signs the driver's input. The reference 19 signs the control outputs, whereby reference 21 signs measurements.

The State Estimator can estimate not only the states of the nominal plant, but can be extended to additionally estimate disturbances acting on the plant. Disturbances can be for instance side wind forces, yawing moments / lateral forces resulting from μ-split on the tires, etc. Once the disturbances are known, they can be rejected through the feed forward controller.

So, with EPAS equipped vehicle, we can implement a Vehicle Control Structure composed by Disturbance Computation through State Estimator (above F2) and Feed Forward Disturbance Rejection (above F4). This control structure was proposed above and is better detailed in the next.

A first group of functions (= sum Block 22) is implemented preferably comprising a vehicle disturbance estimator 23 and a vehicle disturbance compensation 24. In a second group of functions 26 a Rack Position Control 27 is implemented. The reference 28 are vehicle measurements. The reference 29 is a disturbance estimation. The reference 31 signs a Δ Vehicle Wheel Angle whereby reference 32 signs a Δ EPAS Torque command. Reference 33 signs the Driver Assist Torque.

The first group of functions 23, 24 is Vehicle dependent: they have a certain vehicle target to achieve (e. g. keep the vehicle on track), they need the knowledge of vehicle behavior (models,...) and measurements. The second group 26 are EPAS dependent functions: here we find knowledge of the steering subsystem (EPAS model) and related measurements may be required. The functions in the second group 26, as being steering subsystem oriented, could be efficiently designed and implemented by the EPAS supplier.

It's very important to have the split of the above blocks in two groups: if the vehicle changes, the Vehicle Dependent group will change but not the EPAS Dependent, and vice versa if the EPAS system (and supplier) changes.

In the core of different steering systems like AFS or SBW, Block 27 is not needed, as output 31 can be directly commanded to the steering system

BLOCK 23: Vehicle Disturbance Estimator

This function is mainly a vehicle state observer, capable in addition to estimate external Forces/Moments acting on the vehicle (disturbances in the next), which can be balanced with the steering actuation.

The Vehicle Measurements necessary for this function are Vehicle Wheel Angle (*VWA*), Lateral Acceleration (*LA*), Yaw Velocity (*YV*) and vehicle speed (*VS*). Other measurements will be required depending on how accurate we want the model to be. The mentioned Measurements are normally available in vehicles equipped with Stability Control Functions.

The way this function works is the following: given certain measured values for *VWA* and VS, the vehicle model computes the values *LA* and *YV* the sensor should measure. The comparison of the computed and the measured values will determine the estimation of *disturbances.*

BLOCK 24 : Vehicle Disturbance Compensation

This function receives as input the values of the disturbances acting on the vehicle and computes the ΔVehicle Wheel Angle (Δ*VWA*) value, necessary to reject all or a part of these disturbances and to keep the vehicle in track. This function contains the vehicle model and performs a feed-forward control of the vehicle behavior.

If only one disturbance is acting on the vehicle, the inversion of the vehicle model will give the corresponding Δ*VWA*, that then will be changed in sign for the rejection. If both [*LF, YM*] at the same time will experience disturbances, then the inversion will require some technique to find the optimal value of the correction angle Δ*VWA*.

The design of this block needs the knowledge of some reference value of Vehicle Wheel Angle (*VWA_0*).

This is necessary to perform the liberalization around *VWA_0* of the tire characteristic function to obtain Δ*VWA*. If we assume that the tires are linear (small values of Vehicle Wheel Angle), then we do not need any reference point.

We can have in this scheme one or more Vehicle Function which computes a desired Δ*VWA*. We can then sum all to obtain the total displacement vehicle control needs (sum block 22 in Figure 2).

BLOCK 26 : Rack Position Control

This function is the one which computes the Δ EPAS Torque (Δ*ET*), necessary to obtain the Δ*VWA* requested by Vehicle Functions. The Vehicle Wheel Angle is directly related to the Rack Position, and the relation comes out of the geometry of the steering system. So, the request Δ*VWA* is first translated into a request of Delta Rack Position (Δ*RP*) and then the position control law is applied. Some EPAS System measurements will be necessary, like actual rack position (*RP*).

Vehicle Disturbance Estimation : details

The problem of estimating vehicle disturbances is in this embodiment of the invention approached and a solution is proposed; the resulting State Estimator is general and can be used within the General Vehicle Control System structure of Fig. 1 and with any other vehicle control actuator setup (i.e., Steer by Wire, Brake actuation, ....).

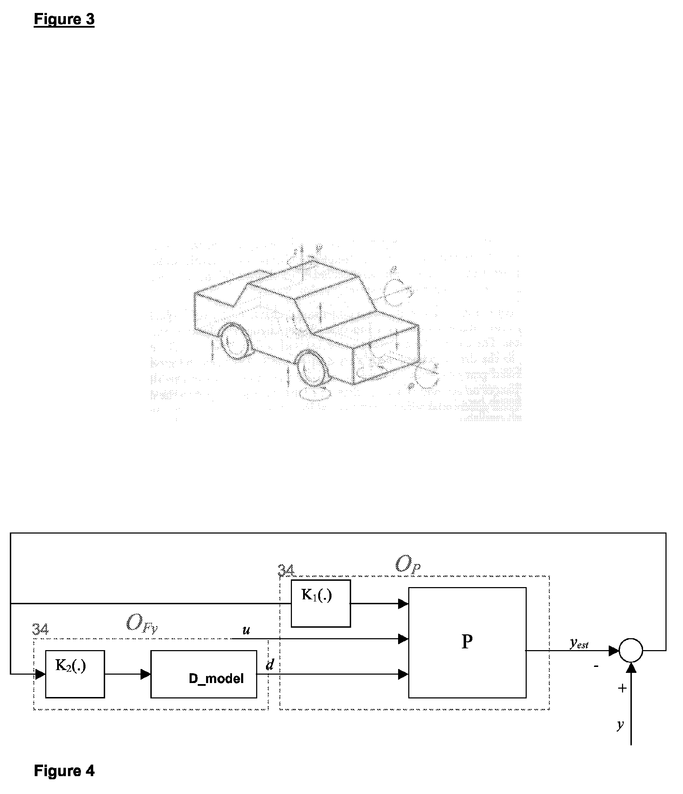

Let's consider a vehicle described with its state space equation in a coordinate system solidal with the vehicle body (Figure 3). Let's assume that the longitudinal, vertical and pitch dynamic is neglectable (*V_x*=constant) and that the Vehicle Wheel Angle (δ) is small enough (tipically, < 15 deg). Then we can write the linearised description of the vehicle motion in the following form:

$$\begin{cases} \dot{x} = A(.)x + B(.)u \\ y = C(.)x + D(.)u \end{cases} \tag{2}$$

where

$$u = \delta; \quad y = \begin{bmatrix} a_y \\ \dot{\psi} \end{bmatrix}; \qquad x = \begin{bmatrix} v & \dot{\psi} & \dot{\varphi} & \varphi \end{bmatrix};$$

| | |
|---|---|
| *A(.), B(.), C(.), D(.)*[1] | matrix functions of the working point (*Vx*, δ_0); |
| *V_x* | velocity x direction (longitudinal velocity); |
| δ | Vehicle Wheel Angle; |
| ν | velocity y direction (lateral velocity); |
| $\dot{\psi}$ | yaw rate; |
| φ | roll angle; |
| *F_y* | Force y direction acting on body CoG (lateral Force); |
| *M_z* | Moment on z axis (yawing moment). |

[1] The notation (.) indicates in general functional dependancy.

We consider that lateral force disturbance (Δ*F_y*) is acting on the vehicle and are unknown. These can be for instance road banking or side wind lateral force.

In the following is described a preferred Method to estimate these disturbances.

The vehicle equations including disturbances are:

$$P: \begin{cases} \dot{x} = A(.)x + B(.)u + M(.)d \\ y = C(.)x + D(.)u + N(.)d \end{cases} \tag{3}$$

where $d = \Delta F_y$.

We suppose that the disturbace satisfies the differential equation:

$$d^{(k)} = 0^2 \tag{4}$$

This is generally true for every smooth signal, due to the fact that we can approximate it with its Taylor series expansion. Our model will be more accurate for high values of k, despite it will require more computations.

For simplicity of discussion, we assume in the following k=2.

Then the plant including the disturbance model (eq. 3) is now:

$$P_e: \begin{cases} \dot{x}_e = A_e(.)x_e + B_e(.)u \\ y = C_e(.)x_e + D(.)u \end{cases} \tag{5}$$

with:

$$x_e = \begin{bmatrix} x \\ \zeta \end{bmatrix}; \qquad \zeta = \begin{bmatrix} \zeta_1 \\ \zeta_2 \end{bmatrix} \qquad d = \zeta_1$$

$$A_e = \begin{bmatrix} A(.) & M_1(.) \\ 0_V & J_1 \end{bmatrix}; \quad B_e = \begin{bmatrix} B(.) \\ 0_V \end{bmatrix}; \quad C_e = \begin{bmatrix} C(.) & N_1(.) \end{bmatrix};$$

$$J_1 = \begin{bmatrix} 0 & 1 \\ 0 & 0 \end{bmatrix}; \quad 0_V = \begin{bmatrix} 0 \\ 0 \end{bmatrix}; \qquad M_1(.) = \begin{bmatrix} M(.) & 0 \end{bmatrix}; \quad N_1(.) = \begin{bmatrix} N(.) & 0 \end{bmatrix};$$

where, in the above description, we introduced the extension state vector $\zeta$ to describe in state space the disturbance model (eq. 4).

If $P_e$ satisfies the observability conditions, we can design the observer of this extended plant; its state estimation will include the disturbance estimation and this will solve the estimation problem.

Note that $P_e$ is observable if and only if $P$ is observable, due to the fact that the disturbance model (eq. 4) is observable and that, in general, we can choose an observable state space realisation $P$ describing the vehicle behaviour.

The Luemberger state observer for the plant $P_e$ is:

$$VDE: \begin{cases} \dot{x}_{est} = A(.)x_{est} + M_1(.)\zeta_{est} + B(.)u + K_1(.)(y - y_{est}) \\ \dot{\zeta}_{est} = J_1\zeta_{est} + K_2(.)(y - y_{est}) \\ y_{est} = C(.)x_{est} + N_1(.)\zeta_{est} + D(.)u \\ d = \zeta_1 \end{cases}$$

$$(6)$$

where the observer gain is $K(n+k,2) = \begin{bmatrix} K_1(.) \\ K_2(.) \end{bmatrix}$,

with $K_1(.)$, dimension (n,2), is the matrix of vehicle model gains, function of the working point ($V_x$, $\delta_0$), $K_2(.)$, dimension (k,2) is the matrix gain for the update of $d=\Delta F_y$ estimation. Note that the matrix gain $K_1(.)$ is parameter dependent (vehicle speed, vehicle wheel angle) just like the vehicle model matrixes A(.) and C(.) and $K_2(.)$ can in general inherit this dependency.

Equation (6) is the general form, in state space description, of the proposed Vehicle State and Disturbance Estimator.

The overall block diagram of the state observer and disturbance estimator is shown in Figure 4.

We see that the overall observer is split in two parallel parts (blocks 34 in Fig. 4), namely $O_P$, $O_{Fy}$ and the computation of the prediction error ($y$-$y_{est}$), where:

1. $O_P$ is the basic plant $P$ observer, without any disturbance estimation;

2. $O_{Fy}$ is the lateral force disturbance estimation, based on disturbance model *(D_Model)* and updating due to measurements.

The relation $O_{Fy}$, from the prediction error to the disturbance estimation is:

$$d = W(s)(y - y_{est}) = \left[ \frac{k_2(1,1)s + k_2(2,1)}{s^2}, \quad \frac{k_2(1,2)s + k_2(2,2)}{s^2} \right](y - y_{est}) \qquad (7)$$

The system in eq. (7) has the property of being *type* 2 and this is in line with our assumptions regarding the error model.

In fact, we wanted to design an observer capable of estimating disturbances satisfying equation (3), with k=2. The *type* 2 property of the estimator we obtained (2 integrators in the disturbance estimation chain) ensures that the estimation error for input disturbances such as $d=t$ or $d=constant$ (both satisfying equation (3) with k=2) asymptotically converges to zero.

The speed of convergence of the disturbance estimation will depend on the 2 related calibration parameters in eq. 7.

1. The proposed scheme for the disturbance estimation remains valid for any other linearised description of the vehicle behavior.

2. Different structure of the observer would come out if the disturbance is not modeled in the plant's input (i.e. can be in the output, or in the internal state equations); using the same idea is anyway simple to deduce what would be the new disturbance estimator structure.

3. Eq. (7) can be simply generalized for every choice of k by the following transfer function:

$$d = W(s)(y - y_{est}) = \left[ \frac{\sum_{h=0}^{k-1} k_2(k-h,1)s^h}{s^k}, \quad \frac{\sum_{h=0}^{k-1} k_2(k-h,2)s^h}{s^k} \right](y - y_{est}) \qquad (9);$$

the estimator would in this case asymptotical track any disturbance of form $d = \dfrac{t^{k-1}}{(k-1)!}$, that satisfy the differential equation in (3).

Vehicle Disturbance Compensation: details

After the estimation problem is solved, the next step is to design the vehicle controller (block 24, fig. 2).

Given a vehicle equipped with active steering system driving through lateral wind, the problem is to find a controller, which minimizes the effect of disturbance lateral forces (i.e. wind forces) on the vehicle motion.

The active steering system is general (EPAS, AFS, SBW) and the vehicle measurements available are lateral acceleration (ay), yaw rate ($\dot{\psi}$) and steering angle ($\delta$). Additionally the wind force is externally estimated and made available.

The controller solving the problem behaves better then the driver can do: in fact, despite the driver himself, while driving through side wind, has a target similar to the controller's, that is keep the vehicle in track, his reaction time is varying from 0.5 to 1 sec., much slower then the sensor reaction time plus computation plus actuation time (which can be approximated with the actuator response, ~100 to 500 ms).

The interactions of the controller with the driver are considered, the solution is experimentally verified and the above interaction considered in terms of stability (the controller has to improve the stability of the system, with or without driver) and feeling (the driver has to appreciate the controller and has to feel supported by it). The driver steering feel is particularly important if the steering system is EPAS type.

The 2dof (two degrees of freedom) linear state space description (*dx/dt=Ax+Bu*) of the vehicle behaviour, known as bicycle model (see GEN, G.Genta Motor vehicle dynamics: modeling and simulation- River Edge, NJ: World Scientific, 1997), is characterized by the following dynamic and input matrixes:

$$A = \begin{bmatrix} -\dfrac{k_f + k_r}{m v_x} & -\dfrac{k_f l_f - k_r l_r}{m v_x} - v_x \\ -\dfrac{k_f l_f - k_r l_r}{J v_x} & -\dfrac{k_f l_f^2 + k_r l_r^2}{J v_x} \end{bmatrix}; \quad B = \begin{bmatrix} \dfrac{k_f}{m} \\ \dfrac{k_f l_f}{J} \end{bmatrix} \qquad (10)$$

and by the following state (lateral velocity and yaw rate) and input (road wheel angle) definition:

$$x = \begin{bmatrix} v_y \\ \dot{\psi} \end{bmatrix}; \qquad u = \delta \ .$$

See appendix for related definitions.

Let's introduce the concept of Neutral Vehicle, being the vehicle having the desired behaviour, of the Real&Active Vehicle, as the real vehicle, equipped with active control, disturbed in motion by the wind.

The Neutral Vehicle state is defined by the equation:

$$\dot{x}_N = A x_N + B u$$

and the Real&Active Vehicle by:

$$\dot{x} = A x + B(u + \Delta u) + M F_w$$

where $\Delta u$ is the active steering control input (change in road wheel angle), $F_w$ is a disturbance exogenous input (i.e. lateral wind force) and $M$ is the exogenous input matrix defined by:

$$M = \begin{bmatrix} \dfrac{1}{m} \\ \dfrac{d}{J} \end{bmatrix} \qquad (11).$$

Let's define the Difference Vehicle, having the state: $x_D = x - x_N$, with differential equations:

$$\dot{x}_D = Ax_D + B\Delta u + MF_w \qquad (12)$$

or in Laplace domain:

$$x_D = (sI - A)^{-1}\left[B\Delta u + MF_w\right] \qquad (13)$$

To introduce the Vehicle Output equations, let's define the measured outputs of the model as lateral acceleration and yaw rate:

$$y = \begin{bmatrix} a_y \\ \dot{\psi} \end{bmatrix} = \begin{bmatrix} \dot{v}_y + v_x\dot{\psi} \\ \dot{\psi} \end{bmatrix};$$

and consequently the matrixes C, D and N, respectively state, input and exogenous input matrixes are:

$$C = \begin{bmatrix} -\dfrac{k_f + k_r}{mV_v} & -\dfrac{k_f l_f - k_r l_r}{mV_v} \\ 0 & 1 \end{bmatrix}; \qquad D = \begin{bmatrix} \dfrac{k_f}{m} \\ 0 \end{bmatrix}; \qquad N = \begin{bmatrix} \dfrac{1}{m} \\ 0 \end{bmatrix} \qquad (14)$$

The output equations for the Neutral and the Real&Active Vehicle are:

$$y_N = Cx_N + Du$$

$$y = Cx + D(u + \Delta u) + NF_w$$

and the output of the Difference Vehicle is:

$$y_D = y - y_N = Cx_D + D\Delta u + NF_w = C(sI - A)^{-1}\left[B\Delta u + MF_w\right] + D\Delta u + NF_w \qquad (15)$$

or

$$y_D = \left[C(sI - A)^{-1}B + D\right]\Delta u + \left[C(sI - A)^{-1}M + N\right]F_w = \begin{bmatrix} W_\delta(s) & W_{F_w}(s) \end{bmatrix}\begin{bmatrix} \Delta u \\ F_w \end{bmatrix} (16)$$

With the above definitions, the target of the controller can be equivalently formulated as making the Real&Active Vehicle behaving as much as possible like the Neutral Vehicle, when an exogenous input $F_w$ is present, or, in terms of the Difference Vehicle.

In the following is given the plant (12), (16). It is to find a control input $\Delta u$ to minimize $y_D$.

With the assumption that the controller has the structure:

$$\Delta u = K(s)F_w \qquad (17)$$

the Difference Vehicle results then in the following I/O equation:

$$y_D = (W_\delta(s)K(s) + W_{F_w}(s))F_w \qquad (18)$$

The wind rejection problem can then be stated as finding the feed-forward controller *K(s)* solution of the minimum problem:

$$\min_{H(s),K(s)} \left\| W_\delta(s)K(s) + W_{F_w}(s) \right\| \qquad (19)$$

The most successful solution, found after having analysed the possible reasonable combinations, proved to be the minimization of lateral acceleration (MINAY). In this case the problem (19), has an exact solution

$$K_{a_y,\delta}(s) = -W_{a_y,\delta}(s)^{-1}W_{a_y,F_w}(s) \qquad (20)$$

or, in closed form:

$$K_{a_y,\delta}(s) = -\frac{1}{k_f}\frac{(Jv_x)s^2 + (k_f l_f^2 + k_r l_r^2 - d(k_f l_f - k_r l_r))s + v_x(d(k_f + k_r) - (k_f l_f - k_r l_r))}{(Jv_x)s^2 + k_r l_r(l_f + l_r)s + v_x k_r(l_f + l_r)} \qquad (21)$$

or

$$K_{a_y,\delta}(s) = -\left( \frac{1}{k_f} + \frac{1}{k_f}\frac{(k_f l_f^2 - k_r l_f l_r - d(k_f l_f - k_r l_r))s + v_x d(k_f + k_r) - v_x l_f(k_f + k_r)}{(Jv_x)s^2 + k_r l_r(l_f + l_r)s + v_x k_r(l_f + l_r)} \right) \qquad (22)$$

The steady state and high frequency solutions are:

$$K(s)\big|_{s=0} = -\frac{d(k_f + k_r) - k_f l_f + k_r l_r}{k_f k_r(l_f + l_r)} \qquad (23)$$

$$K(s)\big|_{s=\infty} = -\frac{1}{k_f} \qquad (24)$$

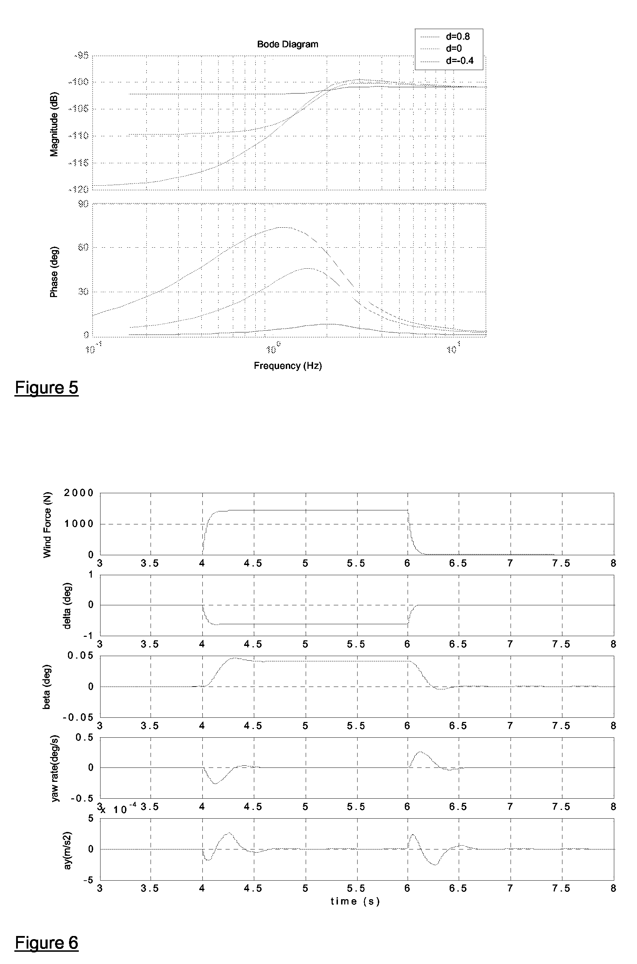

and the relative bode plot is in Figure 5.

The minimum problem (19) supposing the norm to be $\|.\|_2$, can be solved in closed form with pseudoinverse (PINV) approach:

$$K_{PI}(s) = -(W_\delta(s)^T W_\delta(s))^{-1} W_\delta(s)^T W_{F_w}(s) \qquad (25)$$

which can be expressed in closed form. This solution (PINV) minimizes the least square of the cost function.

It's interesting to notice that PINV solution has the same low frequency (23) and high frequency gain (24) of MINAY and despite the number of poles / zeros is different (four poles and four zeros), the bode plots are almost the same within the frequency range of vehicle motion ([0,10]Hz).

The MINAY controller ideally insures that the wind results in no lateral acceleration in the vehicle centre of mass, i.e. if the centre of mass motion was along a straight direction before the wind impact, it will then maintain its directionality. This doesn't mean that the vehicle's state will not be affected by the wind: in fact the yaw rate and lateral velocity will be perturbed for the whole active wind phase and indeed these residual lateral velocity and yaw rate are necessary for the vehicle tires to produce the wind rejection forces.

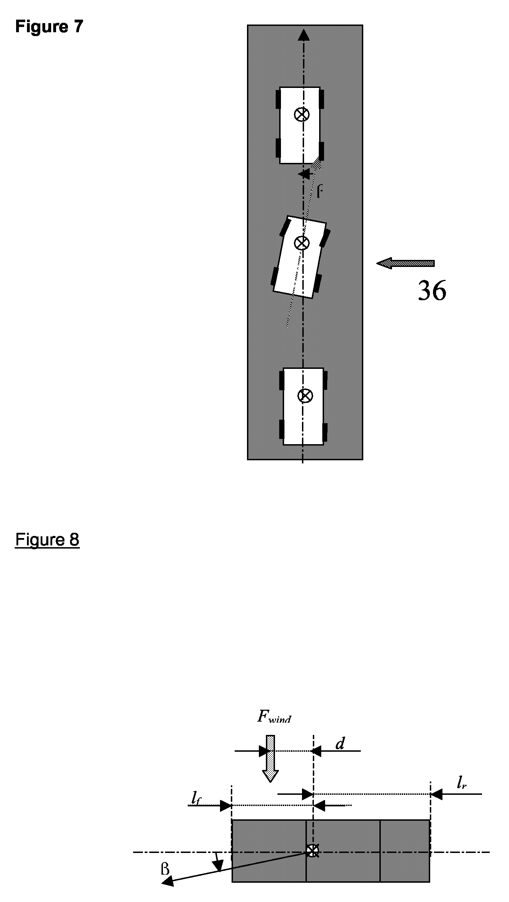

To better explain the concept, let's analyse the simulation of this controller (Figures 6, 7). In Figure 7 the reference 36 signs the Wind Force direction.

As soon as wind hits the vehicle, the steering angle ideally move against the wind. The effect on the state during the transient is a peak of yaw rate and an increasing body slip angle ($\beta=v_y/v_x$), which bring to a new steady state motion: the vehicle yaws no more, but the body slip angle is constant and positive. This slip angle is necessary for the tires to give lateral forces counteracting the 1500N of wind force. As soon as the wind disappears, a new transient, opposite to the first, brings back the vehicle to a state, as it was before the wind came.

The described MINAY controller is then in a mathematical sense proved good due to the equivalence with the PINV.

This wind rejection method resulted successful in a prototype demonstration vehicle equipped with EPAS steering. In particular vehicle directionality was improved and the controller-driver interaction was positively accepted by different drivers.

The control problem of compensating for side wind was addressed for a vehicle equipped with a general steering actuator.

The wind estimation was supposed to be available and the Vehicle Wheel Angle I/F was supposed to be valid to address the steering system (in the case of EPAS steering, an additional SW module was designed, to transform this into a Torque Request to the electric motor).

Different approaches were then addressed to solve the Wind Rejection Problem and the lateral acceleration rejection approach was recognized to be the best one, because

- it best minimizes both lateral acceleration and yaw rate deviations form neutral (PINV);

- it ideally guarantees no path deviation of the centre of mass from the neutral path (MINAY);

- it was successfully implemented in a demonstrator vehicle.

The overall invention showed succesful results in experimental verification. A prototype vehicle was built and each of the functional blocks in Figure 2 were designed to implement Side Wind Compensation (SWC) feature, using EPAS actuator and standard vehicle measurements. The feature was then tested in the Side Wind sensitivity test facility (the same normally used by programs to test production vehicles).

The experiment was standard, according to Test Procedures: artificial wind (40 or 80 kph) was created by wind fans, for a length of 16 m, and the test vehicle was driving across it driving straight line at constant speed. The measures of wind sensitivity were
the drift of the vehicle from the straight line or
the irregularity of the vehicle motion, after the wind hit or
the effort of the driver to keep the vehicle in straight line.

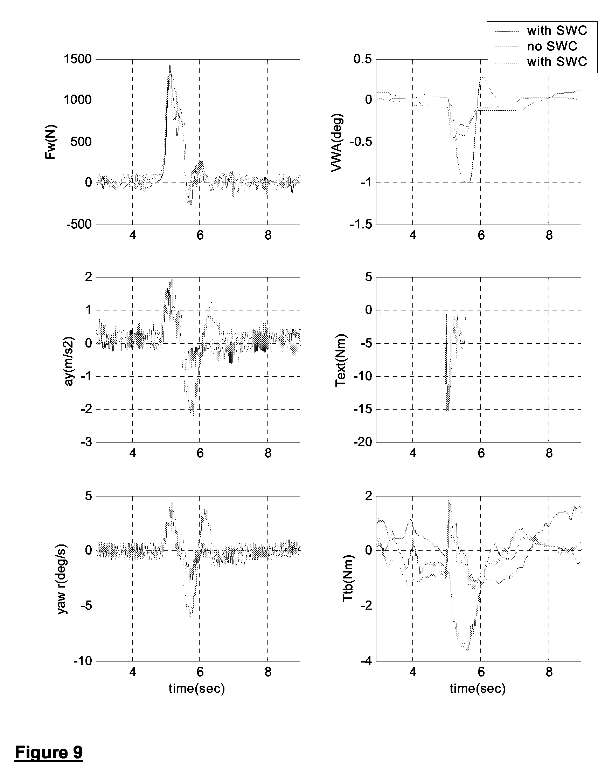

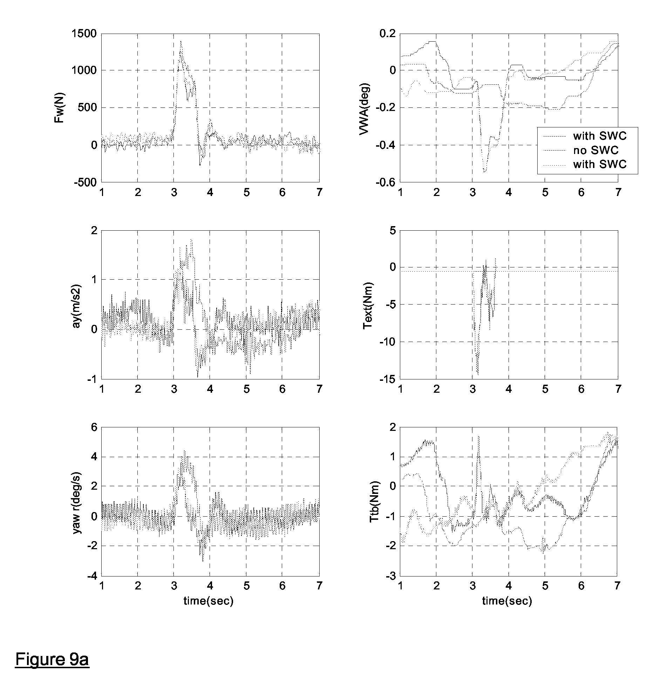

Pictures from the above-described experiments are shown in Figures 9, 9a. In particular the vehicle speed is 120 kph and lateral wind speed is 80 kph. Each figure is related to one driver, who is running three repetitions of the same experiment: first with SWC feature, then without and finaly again with SWC feature.

The experimental data showed:

that the vehicle drift was improved. Despite this doesn't come out of the proposed figures, experience of Figure 9a showed this as, in the second run, the driver wasn't steering against the wind to correct the path (see plot element [1,2]);

that yaw rate, lateral acceleration and Vehicle Wheel Angle (VWA) of the vehicle were smoother and smaller with the controller (see elements [2,1], [3,1] and [1,2] when the driver was trying to keep the path, in Figure 9. Moreover the VWA correction to the wind impact comes earlier and this is well known to be essential to get an effective control action;

that the effort of the driver to keep straight line direction was drastically reduced (see element [3,2] in Figure 9.

# Appendix

## Terms and abbreviations

| | |
|---|---|
| EPAS | Electric Power Assisted Steering |
| IVDC | Integrated Vehicle Dynamics Control |
| $a_y$ | Lateral acceleration of the vehicle |
| $v_y$ | Lateral velocity of the vehicle |
| $\dot{\psi}$ | Yaw rate of the vehicle |
| $v_x$ | Vehicle Speed |
| $F_{yf,r}$ | Tires Lateral Forces, front and rear |
| $\alpha_{f,r}$ | tire slip angle, front and rear |
| $\beta$ | vehicle sleep angle |
| $l_f, l_r$ | front and rear half vehicle lenght |
| $m$ | vehicle mass |
| $J$ | vehicle inertia |
| $d$ | wind action arm, resulting in a moment |

## Numerical Values

*lf = 1.0174 m*
*lr = 1.7356 m*
*d = 0.8 m*
*kf = 112000 N/rad*
*kr = 157000 N/rad*
*m = 1446 kg*
*J = 2284 kgm²*

**Claims**

1. Steering System Control for vehicles with at least an Electric Power Assisted System (EPAS) (2) comprising an Electric Control Unit (ECU) (6),
**characterized by**
means for a level control functionality implemented in the EPAS (2) such that an additional torque is commanded on an Electric Power Assisted System actuator (3).

2. Steering System Control according to claim 1,
**characterized in, that**
said means at least comprising a first group of functions (22) and a second group of functions (26), whereby the first group of functions (22) are vehicle dependent and the second group of functions (26) are EPAS dependent.

3. Steering System Control according to claim 2,
**characterized in, that**

that said first group of functions (22) at least comprising a Vehicle Disturbance Estimator (23) and a Vehicle Disturbance Compensator (24) and said second group of functions (26) at least comprising a Rack Position Control (27).

4. Method to determine and compensate disturbances acting on vehicles with a Steering System (1) comprising an Electric Power Assisted System (EPAS) (2) containing an Electric Control Unit (ECU) (6) in particular according to one of the preceeding claims,
**characterized by**
means for a level control functionality implemented in the EPAS (2) capable to command an additional torque on an EPAS actuator (3).

5. Method according to claim 4,
**characterized in, that**
said means are implemented in the ECU (6) said means at least comprising a control structure (11) with a first group of functions (22) an a second group of functions (26) whereby said first of functions (22) are vehicle dependent functions and said second group of functions (26) are EPAS dependent functions, whereby said first group of functions (22) at least containing a Vehicle Disturbance Estimator (23) and a Vehicle Disturbance Compensator (24) and said second group of functions (26) at least comprising a Rack Position Control (27), whereby said Vehicle Disturbance Estimator (23) is given measured Values for a Vehicle Wheel Angle (VWA), Vehicle Speed (VS), vehicle lateral acceleration and yaw rate, such that a vehicle model determines values of Lateral Acceleration (LA) and Yaw Velocity (YW) so that a comparison of the determined and the measured values will determine an estimation of disturbances, and said Vehicle Disturbance Compensation (24) receives as input the values of disturbances acting on the vehicle and determines a Vehicle Wheel Angle ( VWA), and said Rack Position Control (27) determines an EPAS Torque ( ET) to obtain the VWA requested by Vehicle Level Functions.

6. Method to determine and compensate disturbances acting on vehicles with a Steering System (1) comprising an Electric Power Assisted System (EPAS) (2) containing an Electric Control Unit (ECU) (6) in particular according to one of the preceeding claims,
**characterized in, that**
the disturbance is lateral wind force and by a controller to minimize the effect of wind on a vehicle motion, in lateral accelaration sense implemented in the EPAS (2) such that an additional torque is commanded on an EPAS actuator (3).

7. Method to determine and compensate disturbances acting on vehicles with a Steering System (1) comprising an Electric Power Assisted System (EPAS) (2) containing an Electric Control Unit (ECU) (6) in particular according to one of the preceeding claims,
**characterized by**
a Vehicle Control Structure at least composed by disturbance determination through at least a State Estimator (13) and a Feed Forward Controller (16) such that an additional torque is commanded on an EPAS actuator (3).

8. Method according to claim 7,
**characterized in, that**
said State Estimator (13) is extended to additionally estimate disturbances acting on the plant, so that said Vehicle Control Structure is capable to reject said disturbances through the Feed Forward Controller (16).

7

8

6

$T_a$

1,2

4

3

9

Fig. 1

18, 28

12

16, 24

31

19

27

17 , 32

14

29

26

33

13, 23

21

17

22

Fig. 2

**Figure 3**

**Figure 4**

Figure 5

Figure 6

**Figure 7**

36

<u>Figure 8</u>

$F_{wind}$

$d$

$l_r$

$l_f$

ß

**Figure 9**

Figure 9a

**European Patent Office**

**EUROPEAN SEARCH REPORT**

Application Number

EP 04 10 3741

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | FR 2 843 085 A (RENAULT SA) 6 February 2004 (2004-02-06) * page 1, lines 4-20; claims 1,4; figures 1-3 * * page 3, lines 12-23 * ----- | 1-8 | B62D6/04 B62D6/00 |
| X | US 5 845 222 A (NISHIMORI TAKASHI  ET AL) 1 December 1998 (1998-12-01) * column 1, line 65 - column 2, line 9; claim 1; figures 1,2 * * column 5, line 30 - column 6, line 13 * ----- | 1-8 | |
| X | WO 01/47762 A (DELPHI TECH INC) 5 July 2001 (2001-07-05) * the whole document * ----- | 1-8 | |
| X | FR 2 801 270 A (RENAULT) 25 May 2001 (2001-05-25) * claims 1-3; figure 1 * ----- | 1-8 | |
| X | WO 02/47945 A (SADANO ON ; SATOU SHIGEKI (JP); KAWAZOE HIROSHI (JP); NISSAN MOTOR (JP) 20 June 2002 (2002-06-20) * page 8, line 11 - page 12, line 12; figures 1,2 * ----- | 1-8 | TECHNICAL FIELDS SEARCHED (Int.Cl.7) B62D |
| X A | US 2004/138796 A1 (YAO YIXIN  ET AL) 15 July 2004 (2004-07-15) * paragraphs [0031] - [0034]; claims 1,21; figure 1 * ----- | 1,2 3-8 | |
| A | US 2003/191572 A1 (FRENTZ HUBERTUS RAITZ VON  ET AL) 9 October 2003 (2003-10-09) * the whole document * ----- | 1-8 | |
| A | EP 1 275 937 A (TOYODA CHUO KENKYUSHO KK) 15 January 2003 (2003-01-15) * paragraphs [0053] - [0058]; claims 1,21; figure 1 * ----- | 1-8 | |

The present search report has been drawn up for all claims

| Place of search | Date of completion of the search | Examiner |
|---|---|---|
| Berlin | 30 November 2004 | Matos Gonçalves, M |

EPO FORM 1503 03.82 (P04C01)

## ANNEX TO THE EUROPEAN SEARCH REPORT
## ON EUROPEAN PATENT APPLICATION NO.

EP 04 10 3741

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2004

| Patent document cited in search report | | Publication date | Patent family member(s) | | Publication date |
|---|---|---|---|---|---|
| FR 2843085 | A | 06-02-2004 | FR 2843085 A1 | | 06-02-2004 |
| US 5845222 | A | 01-12-1998 | JP 3095961 B2 | | 10-10-2000 |
| | | | JP 8104249 A | | 23-04-1996 |
| | | | DE 19536989 A1 | | 11-04-1996 |
| WO 0147762 | A | 05-07-2001 | EP 1246746 A1 | | 09-10-2002 |
| | | | JP 2003534180 T | | 18-11-2003 |
| | | | WO 0147762 A1 | | 05-07-2001 |
| | | | US 2001041957 A1 | | 15-11-2001 |
| FR 2801270 | A | 25-05-2001 | FR 2801270 A1 | | 25-05-2001 |
| WO 0247945 | A | 20-06-2002 | JP 2002178943 A | | 26-06-2002 |
| | | | CN 1400944 T | | 05-03-2003 |
| | | | EP 1268254 A2 | | 02-01-2003 |
| | | | WO 0247945 A2 | | 20-06-2002 |
| | | | US 2003078712 A1 | | 24-04-2003 |
| US 2004138796 | A1 | 15-07-2004 | DE 102004001318 A1 | | 05-08-2004 |
| US 2003191572 | A1 | 09-10-2003 | DE 10191529 D2 | | 08-07-2004 |
| | | | WO 0181139 A1 | | 01-11-2001 |
| | | | EP 1276649 A1 | | 22-01-2003 |
| | | | JP 2003531066 T | | 21-10-2003 |
| EP 1275937 | A | 15-01-2003 | JP 2003127888 A | | 08-05-2003 |
| | | | EP 1275937 A2 | | 15-01-2003 |
| | | | JP 2004045402 A | | 12-02-2004 |
| | | | US 2003051560 A1 | | 20-03-2003 |

EPO FORM P0459

For more details about this annex : see Official Journal of the European Patent Office, No. 12/82